# EUROPEAN PATENT SPECIFICATION

(11) **EP 1 464 927 B1**
(45) Date of publication and mention of the grant of the patent: **20.04.2016**
(21) Application number: 03023567.5
(22) Date of filing: 16.10.2003
(51) Int. Cl.: G01F 1/10, G01F 1/115, G01F 1/24

(54) **A flowmeter with magnetic sensor**
Durchflussmesser mit magnetischem Sensor
Débitmètre avec un capteur magnétique

(30) Priority: 21.03.2003 IT MI20030552
(43) Date of publication of application: 06.10.2004
(73) Proprietor: FUGAS S.p.A., 20090 Trezzano sul Naviglio (MI) (IT)
(72) Inventor: Fugazza, Giuseppe, 20090 Trezzano sul Naviglio (MI) (IT); Tronconi, Alberto, 20019 Settimo Milanese (MI) (IT)
(74) Representative: Ripamonti, Enrico

(56) References cited:
- EP-A1- 0 016 321
- EP-A1- 0 031 629
- EP-A1- 0 069 170
- DE-A1- 1 548 898
- DE-A1- 3 906 432
- US-A- 3 589 188
- US-A- 3 911 743
- US-A- 4 936 508
- US-A- 5 337 615

## Description

The present invention concerns an improved flowmeter, i.e. a component adapted to measure the flow rate of a fluid in a hydraulic plant. The invention can be advantageously employed in combined heating and sanitary water plants, that is devices for domestic use in which the water heated by a gas burner is used both to feed heat radiating elements (heaters), and to heat water (so called sanitary water) for several uses. This usage of the invention is not to be considered as a limitation of the possible applications of the disclosed device.

US 4,308,755 is the most pertinent prior art for the present invention and forms the preamble of the main claim.

There are known several types of flowmeters. For example US-A-5 115 684 discloses a flowmeter equipped with a magnet carried by a piston associated to a Hall-effect sensor.

US 4 308 755 discloses a flowmeter that uses a turbine fitted in a U-shaped tube section for fuel feeding. The flow sensors for heating installations generally provide for a turbine shaped like a mill wheel.

US-A-3 878 718 discloses a flowmeter with a real turbine with a rotor and fixed blades, which is however designed to be used in clean fluids.

US 5,337,615 discloses a fluid volumetric flow sensor having relaxed dimensional tolerances of the type in which a swirl, imparted to the fluid by channels in a housing, causes a rotor to spin. The rate at which the rotor spins may be measured by allowing the rotor lobes to interrupt an optical beam generated by a clip-on opto-electric module. The swirl-inducing channels that cause rotor motion lead from an inlet chamber into a small volute chamber that is upstream of and separate from the rotor chamber. The rotor is entirely supported by flowing fluid at normal flow rates.

US 4,936,508 discloses a shower head volume meter producing an audible or other alarm for indicating when a predetermined volume of water has been delivered. A first embodiment measures the volume of water with a magnetic turbine and pick-up coil. The turbine rotates in response to water flow through meter generating a rotating magnetic flux. The flux lines cut across the pick-up coil which produces electrical pulse signals at a rate corresponding to the water flow rate. The number of magnetic poles in the turbine determines the total volume of water that can be delivered. A microcontroller analyzes the pulse signals and initiates the alarm.

Finally, US-Á-6 481 293B1 discloses a flowmeter equipped with a turbine, wherein the fluid outlet is disposed along a direction perpendicular to the turbine axis, and the device is made up by a number of assembled parts, is designed for being assembled at a pipe elbow, and provides for a turbine occupying less than the entire cross section of the conduit in which it is fitted. Moreover the sensor is encased and immersed in the fluid to be measured.

It is an object of the present invention to overcome the limitations of the known devices, and particularly to realise a flowmeter using a turbine, that exhibits good sensibility and precision, and a simple design so as to be of limited cost and easy to be tested, while being all the same quite reliable.

According to the invention, these objects are achieved through a flowmeter as claimed in claim 1. Further advantageous characteristics are recited in the dependent claims.

The flowmeter according to the invention provides for the use of a small size turbine, housed inside a hollow casing, and completely made of plastic materials. The rotor or runner of the turbine, that is of the Kaplan type, is built as a one-piece of moulded plastic material, and carries a permanent magnet of a toroidal shape, to which a Hall-effect magnetic sensor is associated, which sensor is located outside of the casing and is adapted to measure the turbine rotation speed. The sensor is connected to a circuit that processes the received data to generate a signal representative of the fluid flow rate.

The flowmeter according to the invention is equipped with a side or lateral outlet opening for the water, whereby the magnet is not permanently exposed to the main flow.

Further, a device according to the invention can operate - at the proper flow rates - with even relatively large plays, for example of a size larger than the meshes of a filter incorporated in the device.

The device introduces low load losses and is therefore adapted to properly operate even in case of a very low (hydrostatic) head (in the order of 0.6 meter of a water column), moreover it is insensitive to water hammering and vibrations, and further supplies a visual indication of the state of the flow. Moreover the device operates without requiring seals on the rotating shaft, and can be used with its axis disposed along any desired direction in a fluid entraining particles and specks in suspension. The particular configuration of the turbine pins further ensures the centring of the rotor during its rotation, and allow pretty large radial and axial plays, and ensures a regular operation of the device with water containing corpuscles or filaments, also allowing small deformations of the components.

The invention will now be disclosed with reference to the attached drawings that illustrate preferred but not limiting embodiments of the invention, in which:
Fig. 1 is a side view of a flowmeter according to the invention;
Fig. 2 is a longitudinal cross section view of the flowmeter of Fig. 1;
Fig. 3 is an exploded perspective view illustrating in more details the components of the flowmeter according to the invention;
Figs. 4 to 8 illustrate in more details the structure of the turbine used in the flowmeter according to the invention; and
Fig. 9 is a perspective view that illustrates the assembling of the flowmeter in a hydraulic group.

Throughout all the Figures the same numeral references have been used for indicating components that are identical or functionally equivalent. In the following description, the terms upstream and downstream are referred to the fluid flow to be detected.

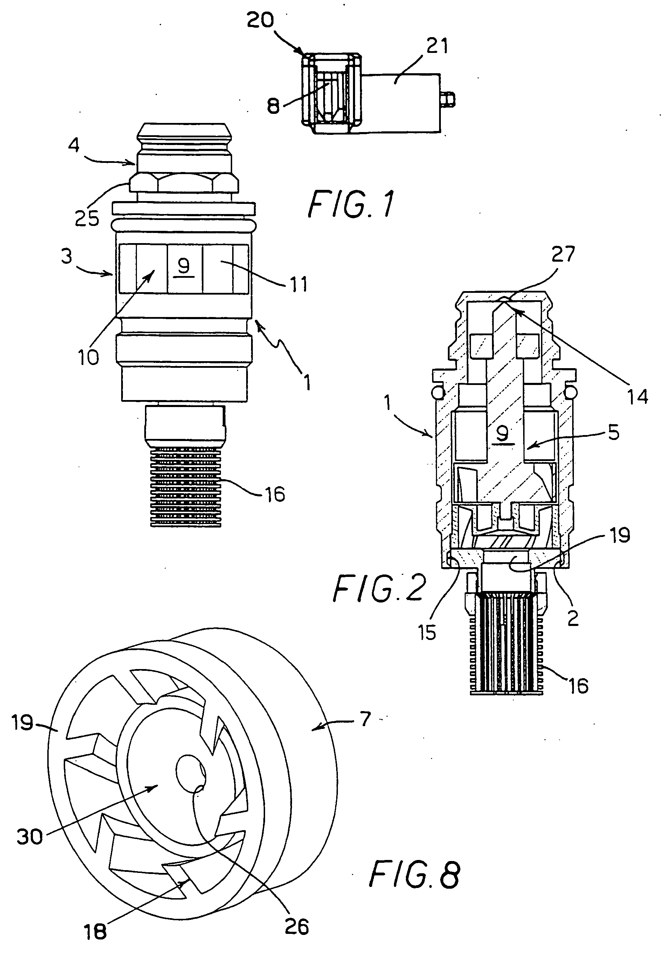

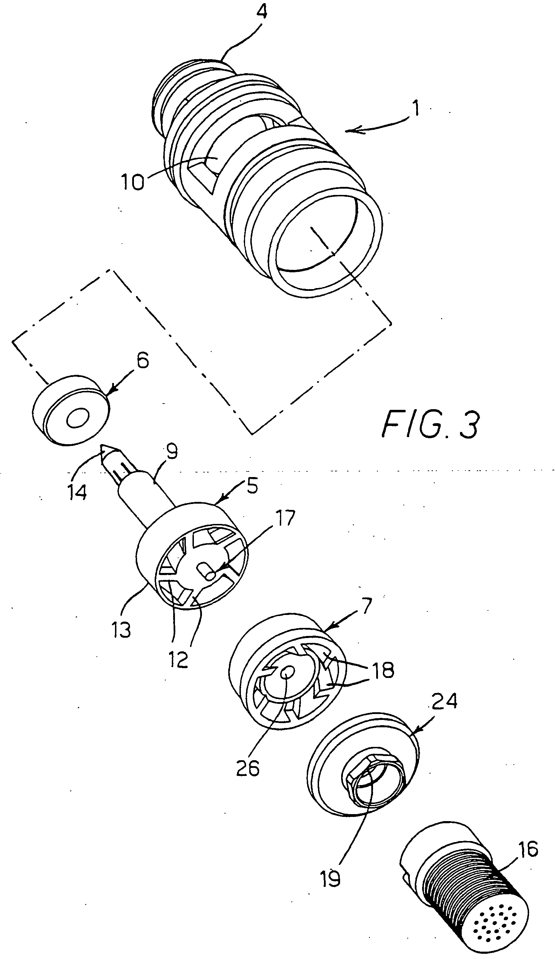

With reference to Figures 1 to 7, a flowmeter according to the invention includes a casing 1 shaped as an elongated internally hollow body provided with an inlet opening 2 and an outlet opening 3, this latter implemented as two side windows 10, 11 that break the continuity of the body 1, and a closed end portion 4 provided with a section 25 that is hexagonal or anyhow not cylindrical.

Within the body 1 there is housed a turbine formed by a runner or rotor 5 carrying a magnet 6, and an associated guide vanes assembly 7, which components will be illustrated with more details in the following. On the end portion 4 of the body 1 there is fitted a small container 20 (shown in a side view only in Fig. 1) housing a magnetic sensor 8, preferably of the Hall-effect type, that results laterally positioned with respect to the axis of the body 1, after it has been fitted to the body 1. The magnetic sensor co-operates with the magnet 6 to produce a square wave signal at a frequency proportional to the turbine rotation speed, and is connected to a buffer circuit for conditioning the signal and decoupling it from the load.

The turbine employed for measuring the flow rate of the liquid passing through the device is of the type known as Kaplan turbine and comprises a runner 5 formed by a shaft 9 carrying at one of its ends blades 12 that are protected and connected by a ring 13. A protruding rear pin or pivot member 17 engages a corresponding central hole 26 in the guide (fixed) vanes assembly 7 provided with blades 18 peripherally connected by a ring 19.

The other end of the runner 5 terminates with a point member or front conical pin 14 that ensures the runner self-centring by fitting into a conical seat 27 provided inside of the closed portion 4, and carries a toroidally shaped permanent magnet 6 near such front pin 14.

Each of the runner (turbine body) 5 and the guide blades assembly 7 is realised as a one-piece moulding of a resin adapted to the fluid being used, and the group formed by the runner and the guide blades assembly has a limited possibility of axial displacement within the body 1. More precisely, in presence of a flow through the body 1, the turbine is pushed forwards in the axial direction so that the point 14 abuts into and against the seat 27 provided in the closed portion 4 which seat supplies a support for the rotation of the group.

The magnet 6 is preferably a multipole magnet, for example a six-pole magnet, with radial magnetisation, and is located downstream of the outlet 3 of the flow of the circulating liquid. Therefore, although immersed in the liquid to be metered, the magnet 6 does not result in being immersed in the main flow thereof, and is therefore subjected to a low wear and a reduced risk of being hit by solid particles.

The end of the body 1 in correspondence of the inlet opening 2 is provided with an inner threading 15 on which a metal ring 24, equipped with a central opening 19 and carrying a cylindrical filter 16, is screwed. When the metal ring 24 is completely screwed onto the threading 15 there remains a certain axial play for the runner-guide blades assembly group, which allows its displacement - together with the conical pin 14 - towards the seat 27. The filter can eventually incorporate a flow limiting device (not shown since it is of a known type).

Advantageously, the container 20 is provided with a hexagonal collar 21 adapted to engage the hexagonal portion 25 so as to position the circuit located inside it - comprising the magnetic sensor 8 - at a predetermined location. The container 20 is snap-fitted to the end portion and it is at least partially transparent, so as to make visible to the outside the lighting of a light indicator typically a LED, that provides a visual indication of the state of the flow inside the flowmeter, for instance the overcoming of the flow rate required for starting the gas burner in a heating and sanitary water plant.

The sensor 8 is made up by a sensor using the Hall effect with an associated SMT technology circuitry and is provided with 3 insulated electric conductors, typically for the power supply common line, the generated signal and the positive supply lines.

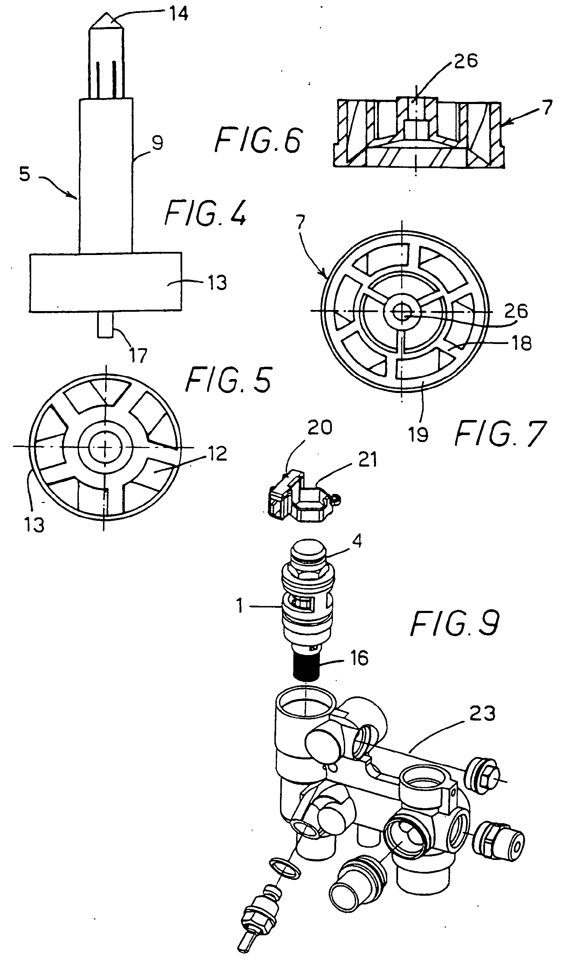

The flow detector is normally fitted inside of a housing member provided with an axial fitting for the inlet 2 and a side or lateral fitting for the outlet 3, whose configurations can vary according to the plant in which the assembly is to be mounted. For example the device of the invention can be mounted in the hydraulic group 23 schematically shown in Fig. 9 with some additional components which are not further illustrated being of known type.

As better shown in the enlarged perspective view of Fig. 8 illustrating the guide blades assembly, in addition to the blades 18, this assembly comprises a central dome-shaped portion 30 that is of particular advantage when a flow limiting device is disposed upward of the flowmeter.

As it is known, the devices for metering a flow rate using a turbine perform an indirect measurement of the fluid flow rate since they are sensitive to the fluid speed and measure the speed reached by the fluid in passing through a well defined cross section. If the fluid inlet cross-section is changed but the flow rate is kept the same, the fluid speed changes. On the other hand an high water pressure can dictate the use of flow limiting devices, and if so the limiting device is often located upward of the turbine, in the metal ring carrying the filter, and this arrangement would alter the flow rate measurement obtained with a turbine.

According to the invention, the guide blades assembly has been designed with a central dome-shaped baffle 30 such as to dissipate all the kinetic energy gained by the fluid when passing through the limiting device (if present) so that anyhow the fluid hits the blades of the guide blades assembly at a very low speed. This way the fluid speed at the outlet of the guide blades assembly only depends on the flow rate, since it has been caused by crossing a constant section duct (i.e. the guide blades assembly). This way a device is obtained with a setting curve that does not depend, within very acceptable limits, on the presence or absence of the limiting device, nor on its design.

## Claims

1. A flowmeter for metering the flow rate of a fluid circulating in a plant, comprising: an elongated internally hollow body (1), provided with an inlet opening (2), a turbine in said body (1) with a permanent magnet (6) fitted to said turbine, and a magnetic sensor (8) laterally located on said elongated body (1), **characterised in that**
said elongated internally hollow body (1) comprises a closed end portion (4) with a conical seat (27) provided inside of the closed end portion,
said elongated internally hollow body (1) comprises at least a side opening (3) as outlet opening (3),
said turbine is axially movable in said elongated internally hollow body (1) because of the flow to be measured,
said turbine being of the Kaplan type and comprising a turbine body or runner (5) provided at one end with blades (12) connected by a ring (13) and at the other end with a self-centring front conical pin (14) suitable to cooperate with a conical seat (27) in a closed end portion (4) of said hollow body (1),
said self-centring front conical pin (14) carries said permanent magnet (6), whereby said permanent magnet (6) is located in said closed end portion (4),
a guide blades assembly (7) which is located between said inlet opening (2) and said turbine body (5), the latter having a pin (17) suitable to engage a hole (26) in the guide blades assembly (7), the latter comprising blades (18) peripherically connected by a ring (19) and a dome-shaped baffle (30) adapted to dissipate the kinetic energy acquired by the fluid and to reduce its speed.

2. A flowmeter as claimed in claim 1, **characterized in that** said outlet opening (3) is located upward of said magnet (6).

3. A flowmeter as claimed in the preceding claims, **characterized in that** said magnet (6) is a multipole toroidal magnet with radial magnetisation.

4. A flowmeter as claimed in the preceding claims, **characterized in that** said outlet opening (3) comprises two side windows (10, 11).

5. A flowmeter as claimed in the preceding claims, **characterized in that** said end portion (4) is provided with a section (25) having an external surface that is not cylindrical.

6. A flowmeter as claimed in the preceding claims, **characterized in that** said magnetic sensor (8) is housed in a container (20) positioned in correspondence of said end portion (4) of the body (1) through a collar (21) engaging said section (25) having an external surface that is not cylindrical.

7. A flowmeter as claimed in the preceding claims, **characterized in that** said container (20) is at least partially transparent, so as to make visible to the outside a light indication of the state of the flow inside the flowmeter.

8. A flowmeter as claimed in the preceding claims, **characterized in that** said sensor (8) comprises a Hall-effect sensor with as associated SMT circuitry.

9. A flowmeter as claimed in the preceding claims, **characterized in that** the end of said body (1) in correspondence of the inlet opening (2) is provided with an inner threading (15) on which a metal ring carrying a filter (16) is screwed (24).

## Patentansprüche

1. Durchflussmesser zum Messen der Durchflussmenge eines in einer Anlage zirkulierenden Fluids, umfassend: Einen mit einer Einlassöffnung (2) versehenen länglichen, innen hohlen Körper (1), eine Turbine in dem genannten Körper (1), mit einem an die genannte Turbine angepassten Dauermagnet (6), und einen an dem genannten länglichen Körper (1) seitlich angeordneten magnetischen Sensor (8),
**dadurch gekennzeichnet, dass**
der genannte längliche innen hohle Körper (1) einen geschlossenen Endabschnitt (4) mit einem kegelförmigen Gehäuse (27) innerhalb des geschlossenen Endabschnitts umfasst,
der genannte längliche innen hohle Körper (1) mindestens eine Seitenöffnung (3) als Auslassöffnung (3) umfasst,
die genannte Turbine in dem genannten länglichen hohlen Körper (1) wegen des zu messenden Durchflusses axial bewegbar ist,
wobei die genannte Turbine der Kaplan Art ist und einen Turbinenkörper oder -laufrad (5) umfasst, der an einem Ende mit durch einen Ring (13) verbundenen Schaufeln (12) versehen ist und am anderen Ende einen selbstzentrierenden, kegelförmigen Stirnbolzen (14) hat, der sich eignet, mit einem kegelförmigen Gehäuse (27) in einem geschlossenen Endabschnitt (4) des genannten hohlen Körpers (1) zu kuppeln,
wobei der genannte selbstzentrierende, kegelförmige Stirnbolzen (14) den genannten Dauermagnet (6) trägt, worin der genannte Dauermagnet (6) in dem genannten geschlossenen Endabschnitt (4) angeordnet ist,
eine Baugruppe von Führungsschaufeln (7) zwischen der genannten Einlassöffnung (2) und dem genannten Körper der Turbine (5) angeordnet ist, wobei der Körper einen Bolzen (17) hat, der sich eignet, in eine Bohrung (26) in der Baugruppe von Führungsschaufeln (7) einzugreifen, wobei der Baugruppe Schaufel (18) umfasst, die durch einen Ring (19) peripher verbunden sind, sowie einen kuppelförmigen Abweiser (30) umfasst, der sich eignet, die von dem Fluid erworbene kinetische Energie zu verschwenden und ihre Geschwindigkeit zu reduzieren.

2. Durchflussmesser nach Anspruch 1, **dadurch gekennzeichnet, dass** die genannte Auslassöffnung (3) oberhalb des genannten Magnets (6) angeordnet ist.

3. Durchflussmesser nach den vorherigen Ansprüchen, **dadurch gekennzeichnet, dass** der genannte Magnet (6) einen mehrpoligen ringförmigen Magnet mit radialer Magnetisierung ist.

4. Durchflussmesser nach den vorherigen Ansprüchen, **dadurch gekennzeichnet, dass** die genannte Auslassöffnung (3) zwei Seitenfenster (10, 11) umfasst.

5. Durchflussmesser nach den vorherigen Ansprüchen, **dadurch gekennzeichnet, dass** der genannte Endabschnitt (4) mit einem Bereich (25) versehen ist, der eine nicht-walzenförmige Außenfläche hat.

6. Durchflussmesser nach den vorherigen Ansprüchen, **dadurch gekennzeichnet, dass** der genannte magnetische Sensor (8) in einem Behälter (20) aufgenommen ist, der bei dem genannten Endabschnitt (4) des Körpers (1) durch einen in den genannten Bereich (25) mit einer nicht-walzenförmigen Außenfläche eingreifenden Bund (21) eingeordnet ist.

7. Durchflussmesser nach den vorherigen Ansprüchen, **dadurch gekennzeichnet, dass** der genannte Behälter (20) mindestens teilweise durchsichtig ist, so dass ein Leuchtmelder (18) des Zustands des Durchflusses innerhalb des Durchflussmeters von außen sichtbar ist.

8. Durchflussmesser nach den vorherigen Ansprüchen, **dadurch gekennzeichnet, dass** der genannte Sensor (8) einen Halleffektsensor mit einem angeschlossenen oberflächenmontierten (SMT) Kreislauf umfasst.

9. Durchflussmesser nach den vorherigen Ansprüchen, **dadurch gekennzeichnet, dass** das Ende des genannten Körpers (1) bei der Einlassöffnung (2) mit einer Innengewinde (15) versehen ist, auf der ein einen Filter (16) tragender Metallring geschraubt ist (24).

## Revendications

1. Débitmètre pour mesurer le débit d'un fluide qui circule dans une installation, comprenant : un corps allongé intérieurement creux (1), pourvu d'une ouverture d'entrée (2), une turbine dans ledit corps (1) avec un aimant permanent (6) adapté à ladite turbine, et un capteur magnétique (8) situé latéralement sur ledit corps allongé (1),
**caractérisé en ce que**
ledit corps allongé intérieurement creux (1) comprend une portion terminale fermée (4) avec un siège conique (27) prévu à l'intérieur de la portion terminale fermée,
ledit corps allongé intérieurement creux (1) comprend au moins une ouverture latérale (3) comme ouverture de sortie (3),
ladite turbine est axialement mobile dans ledit corps allongé intérieurement creux (1) à cause du débit à mesurer,
ladite turbine étant de type Kaplan et comprenant un corps ou une roue de turbine (5) ayant à une extrémité des lames (12) connectées par une bague (13) et à l'autre extrémité une tige de centrage conique frontale (14) propre à coopérer avec un siège conique (27) dans une portion terminale fermée (4) dudit corps creux (1),
ladite tige de centrage conique frontale (14) porte ledit aimant permanent (6), ledit aimant permanent (6) étant situé dans ladite portion terminale fermée (4),
un groupe de lames de guidage (7) est situé entre ladite ouverture d'entrée (2) et ledit corps de turbine (5), ce dernier ayant une tige (17) propre à engager un trou (26) dans le groupe de lames de guidage (7), ce dernier comprenant des lames (18) connectées de façon périphérique par une bague (19) et un déflecteur à forme de coupole (30) adapté pour dissiper l'énergie cinétique acquise par le fluide et pour réduire sa vitesse.

2. Débitmètre selon la revendication 1, **caractérisé en ce que** ladite ouverture de sortie (3) est située vers le haut dudit aimant (6).

3. Débitmètre selon les revendications précédentes, **caractérisé en ce que** ledit aimant (6) est un aimant toroïdal multipolaire avec aimantation radiale.

4. Débitmètre selon les revendications précédentes, **caractérisé en ce que** ladite ouverture de sortie (3) comprend deux fenêtres latérales (10, 11).

5. Débitmètre selon les revendications précédentes, **caractérisé en ce que** ladite portion terminale (4) est pourvue d'une section (25) ayant une surface extérieure qui n'est pas cylindrique.

6. Débitmètre selon les revendications précédentes, **caractérisé en ce que** ledit capteur magnétique (8) est logé dans un récipient (20) positionné au niveau de ladite portion terminale (4) du corps (1) à travers un collet (21) qui engage ladite section (25) ayant une surface extérieure qui n'est pas cylindrique.

7. Débitmètre selon les revendications précédentes, **caractérisé en ce que** ledit récipient (20) est au moins partiellement transparent, de sorte à rendre visible à l'extérieur une indication lumineuse de l'état du débit à l'intérieur du débitmètre.

8. Débitmètre selon les revendications précédentes, **caractérisé en ce que** ledit capteur (8) comprend un capteur à effet Hall avec un circuit CMS (montée en surface) associé.

9. Débitmètre selon les revendications précédentes, **caractérisé en ce que** la terminaison dudit corps (1) au niveau de l'ouverture d'entrée (2) est pourvue d'un filetage intérieur (15) sur lequel une bague métallique portant un filtre (16) est vissée (24).
